# EUROPEAN PATENT SPECIFICATION

(11) **EP 3 832 150 B1**
(45) Date of publication and mention of the grant of the patent: **13.09.2023**
(21) Application number: 20207976.0
(22) Date of filing: 17.11.2020
(51) Int. Cl.: F16B 25/00, F16B 12/16

(54) **SCREW AND METHOD OF ASSEMBLING BY MEANS OF SAID SCREW**
SCHRAUBE UND VERFAHREN ZUR MONTAGE MITTELS DIESER SCHRAUBE
VIS ET PROCÉDÉ D'ASSEMBLAGE AU MOYEN DE LADITE VIS

(30) Priority: 02.12.2019 IT 201900022686
(43) Date of publication of application: 09.06.2021
(73) Proprietor: WM System Srl, 42047 Rolo (RE) (IT)
(72) Inventor: MAZZOLI, William, 42047 ROLO (RE) (IT)
(74) Representative: Corradini, Corrado

(56) References cited:
- CA-A- 1 114 582
- FR-E- 19 448
- JP-A- H0 727 114
- US-A- 3 434 168
- US-A- 3 829 163
- US-A- 5 597 357
- US-A1- 2003 049 095
- US-B1- 6 468 013

## Description

### Technical Field

The present invention generally relates to a screw and, more particularly, to a self-threading or self-tapping screw adapted to be used to assemble two mechanical pieces.

### Background

As is known, one of the most common techniques for assembling two mechanical pieces is the one which involves using a screw that is inserted into a through hole made in the first mechanical piece and from here screwed into a corresponding hole made in the second mechanical piece, until the first mechanical piece is tightened between the head of the screw and the second mechanical piece.

In particular, when the second mechanical piece is made of a sufficiently ductile material, for example aluminium, the screw can be of the self-threading or self-tapping type, so that the hole made in the second mechanical piece does not need to be previously threaded but can be threaded directly during screwing.

However, a drawback of this last solution consists in the fact that the shear stresses to which the mechanical pieces can be subjected after their assembly, being discharged exclusively on the threaded stretches of the screw and of the hole, cause the self-threading or self-tapping screw to gradually tend to widen the hole in which it is screwed, with the consequence that the tightening can loosen and the mechanical pieces can move slightly relative to one another and eventually begin to vibrate. A screw of the prior art is shown in US6468013 B1.

### Disclosure of the invention

In light of the foregoing, an object of the present invention is to solve or at least significantly mitigate the aforementioned drawback of the prior art.

Another object is that of achieving such objective within the context of a simple, rational and relatively cost effective solution.

These and other objects are achieved thanks to the characteristics of the invention reported in the independent claims. The dependent claims outline preferred and/or particularly advantageous aspects of the invention but not essential for the implementation thereof.

It should be noted that, in the present discussion, the axial portion means a stretch of the shank of the screw which ideally extends between two distinct delimiting planes orthogonal to the longitudinal axis, so that the cross-section of said axial portion, made at any point of the longitudinal axis between said delimiting planes coincides with and constitutes the entire cross-section of the shank of the screw at that point.

It should also be noted that, the words proximal and distal to/from the head simply means that the first portion of the shank is located closer to the head of the screw than the second portion.

Outer diameter of the first portion refers to the diameter of the smallest ideal cylinder that circumscribes the cross-section of the first portion resulting tangent to the crests of the thread.

Inner diameter of the first portion refers to the diameter of an ideal cylinder coaxial to the one defining the outer diameter but tangent to the valleys of the thread.

Finally, the diameter of the second portion is to be understood as the diameter of the smallest ideal cylinder that circumscribes the cross-section of the second portion.

So for example, if the second portion were cylindrical, the outer diameter would simply be the diameter of said cylinder; if, on the other hand, the cross-section of the second portion was shaped, for example three-lobed, the outer diameter would be the diameter of the smallest ideal cylinder which circumscribes said cross-section resulting tangent to the lobes.

Thanks to this solution, the screw of the present invention can be used substantially as a traditional self-threading or self-tapping screw, for example by inserting the shank of the screw into a through hole obtained in a first mechanical piece and then screwing it into a corresponding hole obtained in a second mechanical piece, until the first mechanical piece is tightened between the head of the screw and the second mechanical piece.

Unlike traditional self-threading or self-tapping screws, the hole obtained in the second mechanical piece will however only be threaded by the first portion of the shank of the screw, i.e. at the mouth thereof, while the second portion of the shank of the screw will simply result to be inserted substantially to size into a deeper, unthreaded stretch of the hole thereof.

Therefore, the shear stresses that can be applied on the mechanical pieces after assembly are not discharged exclusively on the threaded portions of the screw and the hole but can be advantageously absorbed at least in part by the smooth portions, avoiding or in any case slowing down the widening action of the hole and thus making the assembly of the mechanical pieces more stable, safe and long-lasting.

According to a preferred aspect of the invention, the first portion of the shank of the screw can have a three-lobed cross-section.

This three-lobed shape promotes and makes more effective the self-threading or self-tapping action of the first portion of the shank of the screw.

It should be noted that, in this case, outer diameter and inner diameter of the first portion of the shank, refer to the diameter of the ideal cylinder which results to be tangent to the crests or respectively to the valleys of the thread at the lobes.

Another aspect of the present invention provides that the outer thread of the first portion can be a metric thread.

In this way the thread results to be particularly simple and economical to make and, especially but not necessarily in combination with the three-lobed shape of the cross-section, is able to obtain a good self-threading or self-tapping effect.

According to a different aspect of the invention, the second portion of the shank of the screw can have a length equal to or greater than the length of the first portion.

Thanks to this solution, the capacity of the second portion to support the shear loads applied to the screw is advantageously increased, improving the stability and robustness of the assemblies obtainable therewith.

Another aspect of the present invention provides that the shank of the screw can comprise a third axial portion between the head and the first portion, said third axial portion having cylindrical shape with smooth outer surface and diameter greater than the outer diameter of the first portion.

This third portion can be advantageously used as a centering element, for example to center the through hole of the first piece to be assembled to the corresponding hole to be threaded of the second piece, as well as to help support the shear stresses that can be discharged on the screw, without affecting the threaded portion.

According to an aspect of the invention, said third portion of the shank can have a length lower than the length of the first portion.

In this way, the overall length of the screw can be relatively contained.

Another aspect of the invention provides that the shank of the screw can be devoid of any other axial portion which is at the same time more distant from the head and has a larger outer diameter than the second portion.

In other words, the outer diameter of the shank of the screw can progressively decrease from the first portion towards the second portion and up to the terminal end opposite the head.

Thanks to this solution it is in fact possible to ensure that the second portion of the shank is inserted substantially to size into the hole thereof which is partially threaded by the first portion.

According to another aspect of the invention, the screw can be made of steel.

In this way it is advantageously possible to increase the self-threading or self-tapping capacity of the first portion of the shank.

The invention also makes available a method for assembling two mechanical pieces using at least one screw as outlined above.

Going into more detail than what has already been explained above, this method comprises the steps of:
- in a first mechanical piece, making a first through hole having a diameter greater than or equal to the outer diameter of the first portion of the shank of the screw,
- in a second mechanical piece, making a second hole having a diameter smaller than the outer diameter of the first portion of the shank of the screw and greater than or equal to the diameter of the second portion,
- arranging the first and the second mechanical pieces in such a way that the first hole is aligned with the second hole,
- inserting the second portion of the shank of the screw into the second hole making it pass through the first hole, and
- subsequently screwing the first portion of the shank of the screw into the second hole until the first mechanical piece is tightened between the head of the screw and the second mechanical piece,

the depth of the second hole being greater than the length of the stretch of the first portion of the shank of the screw which penetrates into the second hole, when the first mechanical piece is tightened between the head of the screw and the second mechanical piece.

This method takes advantage of the screw outlined above to allow a more stable and robust assembly between the two mechanical pieces, since the shear stresses to which the mechanical pieces are subjected after assembly are absorbed and supported at least in part by the second unthreaded portion of the screw and of the second hole, avoiding overloading the threads and therefore causing widenings of the second hole which could cause loosening of the tightening.

According to one aspect of this method, the second mechanical piece can be made of aluminium.

This solution has the advantage that aluminium is a sufficiently ductile and workable material to be effectively threaded by means of a self-threading or self-tapping screw.

### Brief description of the drawings

Further characteristics and advantages of the invention will become clear from reading the following description provided by way of non-limiting example, with the aid of the figures illustrated in the accompanying tables.

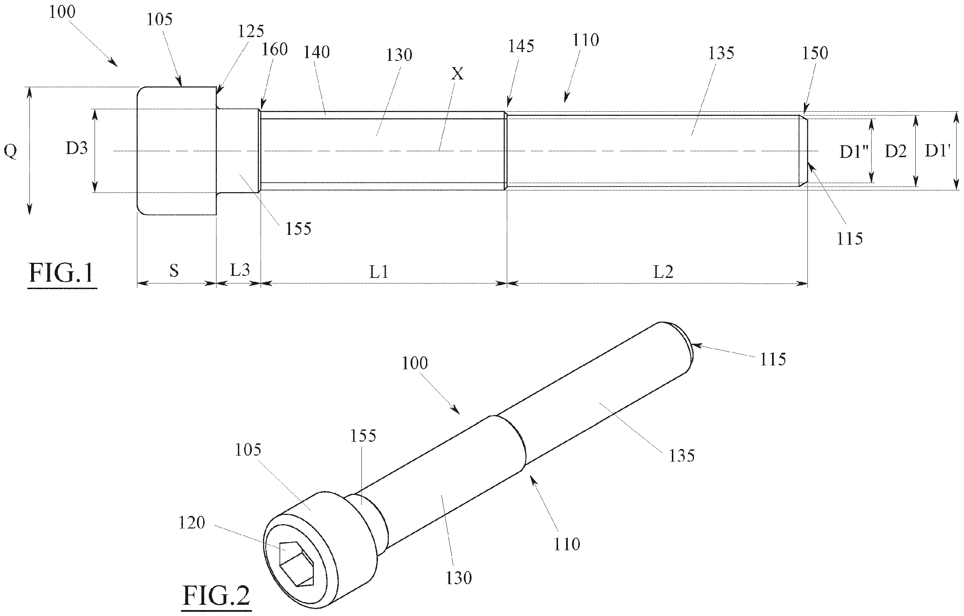

Figure 1 is a schematic side view of a screw according to an embodiment of the present invention.
Figure 2 is an axonometric view of the screw of Figure 1.
Figure 3 shows a trolley that can be assembled using screws like the one shown in figure 1.
Figure 4 shows the cross-section of two mechanical pieces belonging to the trolley which are assembled by means of the screw of figure 1.
Figure 5.

### Detailed description

From the aforementioned figures a screw 100 can be seen, preferably but not necessarily made of metallic material, for example of steel.

The screw 100 comprises a head 105 and a shank 110 extending from the head 105, along a pre-set longitudinal axis, towards an opposite free end 115.

The head 105 can have a substantially cylindrical shape and have, on the opposite side with respect to the shank 110, a cavity 120, for example of a prismatic shape, which is adapted to be coupled with a socket grip wrench, for example an Allen wrench.

By way of example, the head 105 can have a diameter Q approximately equal to 13mm and a length S, i.e. an axial extension, approximately equal to 8mm.

However, it is not excluded that, in other embodiments, the head 105 may have a prismatic outer shape, for example hexagonal, so as to be coupled with a hand wrench such as a pipe wrench.

In both cases, the head 105 is preferably coaxial with the shank 110 and has a diameter Q greater than the latter, so as to make available an abutment surface 125, flat and facing the free end 115, which is orthogonal to the longitudinal axis X.

If it has a prismatic shape, the diameter of the head 105 is to be understood as the diameter of the smallest ideal cylinder which circumscribes the prism and the axis of the head 105 is to be understood as the axis of said ideal cylinder.

The shank 110 comprises (or can ideally be divided into) a plurality of axial portions, in which each axial portion is a stretch of the shank 110 ideally between two distinct delimiting planes orthogonal to the longitudinal axis X.

In this way, the axial portions are all coaxial with each other and the cross-section of each of them, made according to a section plane orthogonal to the longitudinal axis X and passing in any point between the corresponding delimiting planes, coincides and constitutes the entire cross-section of the shank 110 made at the same point and according to the same section plane.

According to the invention, the shank 110 comprises at least two distinct axial portions, of which a first axial portion 130 proximal to the head 105 and a second axial portion 135 distal to the head 105.

The words proximal and distal to/from the head 105 simply mean that the first axial portion 130 is located closer to the head 105 than the second axial portion 135.

The outer side surface of the first axial portion 130 is provided with a thread 140, which preferably covers the entire longitudinal extension of the first axial portion 130 and is adapted to give the latter a self-threading or self-tapping capacity.

For example, the first axial portion 130 can have a constant cross-section with three-lobed shape and the thread 140 can be a metric thread that cuts through the outer side surface of said first axial portion 130 with a three-lobed section.

In this case, the axis of the first axial portion 130 can be defined by the axis of a first ideal cylinder which circumscribes the entire cross-section, resulting tangent to the crests of the thread 140 at the vertexes of the lobes of the cross-section, i.e. at the points that are the most distant from the centre.

The diameter of this first ideal cylinder also defines the outer diameter D1' of the first axial portion 130, while the diameter of a second ideal cylinder, coaxial to the first but tangent to the valleys of the thread 140 at the same vertexes of the lobes, defines the inner diameter D1" of the first axial portion 130.

By way of example, the first axial portion 130 can be a three-lobed portion with metric thread M8, i.e. with a nominal outer diameter of 8mm.

However, it is not excluded that, in other embodiments, the first axial portion 130 may be cylindrical, i.e. with a constant and substantially circular cross-section.

The first axial portion 130 may have, at the distal end thereof (i.e. more distant) with respect to the head 105, a chamfer 145, for example a 45° chamfer, which separates it and joins it with the second portion 135.

Unlike the first axial portion 130, the second axial portion 135 has a smooth outer surface (except for the normal surface roughnesses), i.e. unthreaded.

The second axial portion 135 has a constant cross-section and can have a cylindrical shape or, more preferably, a shape with a constant but shaped cross-section, for example also three-lobed.

In the first case, the axis and the diameter D2 of the second axial portion 135 would clearly coincide with the axis and the diameter of the cylinder.

In the second case, the axis and the diameter D2 of the second axial portion 135 would coincide instead with the axis and the diameter of an ideal cylinder that circumscribes the entire cross-section, resulting tangent to the vertexes of the lobes of the cross-section, i.e. at the points that are the most distant from the centre.

Preferably but not necessarily, the second axial portion 135 can be adjacent and immediately consecutive to the first axial portion 130, from which it can be separated only by the chamfer 145.

The diameter D2 of the second axial portion 135, i.e. the diameter of the outer surface thereof, is between the outer diameter D1' and the inner diameter D1" of the first portion 130.

By way of example, and net of tolerances, the diameter D2 of the second axial portion 135, compared with a first axial portion 130 having a metric thread M8, can be approximately equal to 7.25mm.

The second axial portion 135 can have, at the distal end thereof (i.e. more distant) with respect to the head 105, a chamfer 150, for example a 45° chamfer, which also defines the free end 115 of the shank 110.

In this way, the shank 110 does not have any axial portion which is at the same time more distant from the head 105 and has a larger outer diameter than the second portion 135.

This characteristic cannot be naturally achieved only by the chamfer 150 but also by any other conformation of the shank 110 which provides that the second axial portion 135 defines the free end 115 or, alternatively, that all the possible axial portions placed beyond the second portion 135, i.e. more distant from the head 105, have an outer diameter not greater than the diameter D2 of the second portion 135.

The length L2 of the second axial portion 135, i.e. the extension thereof in the direction of the longitudinal axis X, is preferably equal to or greater than the length L1, in the same direction, of the first axial portion 130

By way of example, the length L1 of the first axial portion 130, including the chamfer 145, can be approximately equal to 25mm, while the length L2 of the second axial portion 135, including the chamfer 150, can be approximately equal to 30.5mm.

The shank 110 can further comprise a third axial portion 155, which is interposed between the head 105 and the first axial portion 130.

The third axial portion 155 can have a cylindrical shape with smooth outer surface (except for the normal surface roughnesses), i.e. unthreaded.

According to a not claimed embodiment, the second axial portion 135 can be adjacent and immediately consecutive to the head 105, from which it is separated by the abutment surface 125.

The diameter D3 of the third axial portion 155, i.e. the diameter of the outer surface thereof, is preferably greater than the outer diameter D1' of the first portion 130 and lower than the outer diameter Q of the head 105.

By way of example, and net of tolerances, the diameter D3 of the third axial portion 155, compared to a first axial portion 130 having a metric thread M8, can be approximately equal to 8-5 mm.

The third axial portion 155 can have, at the distal end thereof (i.e. more distant) with respect to the head 105, a chamfer 160, for example a 45° chamfer, which separates it and joins it with the first portion 130.

The length L3 of the third axial portion 155, i.e. the extension thereof in the direction of the longitudinal axis X, is preferably lower than the length L1, in the same direction, of the first axial portion 130.

By way of example, the length L3 of the third axial portion 155, including the chamfer 160, can be approximately equal to 4.5mm.

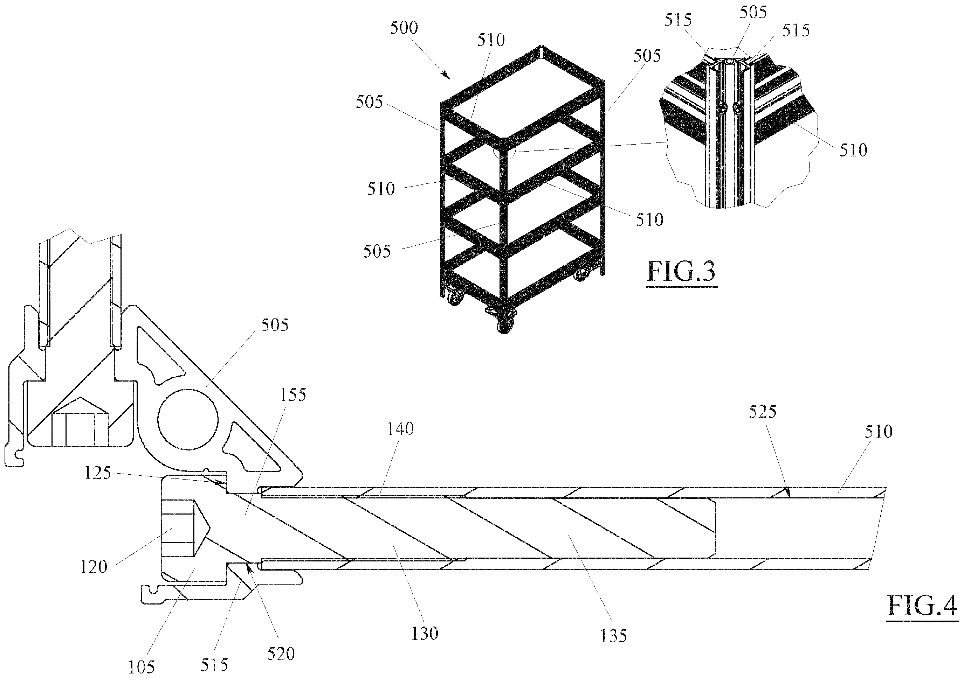

The screw 100 described above can be used to assemble two mechanical pieces together, for example but not exclusively for the construction of a trolley 500 such as the one illustrated in Figure 3.

The trolley 500 can comprise a plurality of vertical uprights 505, to which horizontal cross-members 510 are connected which support a series of shelves.

Each vertical upright 505 can be angular-shaped and have two substantially flat and mutually orthogonal walls 515.

Each horizontal cross-member 510 can be made as an aluminium profile, each axial end of which is end-mounted to a wall 515 of a corresponding vertical upright 505.

The screw 100 can be used precisely to fasten the end of each horizontal cross-member 510 to the wall 515 of the corresponding vertical upright 505.

A first through and unthreaded hole 520 can be made in the wall 515 to carry out this fastening.

This first hole 520 can have an inner diameter greater than or equal to the outer diameter D1' of the first portion 130 of the shank 110 of the screw 100, for example equal to or greater than the diameter D3 of the third portion 155 and smaller than the diameter Q of the head 105.

Correspondingly, a second unthreaded hole 525 can be made in the cross-member 510, in this case at the end thereof and extending axially.

This second hole 525, which can indifferently be a through or blind hole, can be made directly by the extrusion process with which the horizontal cross-member 510 can be manufactured.

The inner diameter of the second hole 525 can be lower than the outer diameter D1' of the first portion 130 of the shank 110 of the screw 100 and greater than or equal to the diameter D2 of the second portion 135.

By way of example, with respect to a first portion 130 with metric thread M8, the diameter of the second hole 525, net of tolerances, can be approximately equal to 7.4mm.

The horizontal cross-member 510 and the vertical upright 505 can be placed side by side so that the first hole 520 and the second hole 525 are coaxially aligned with each other, for example with the end of the horizontal cross-member 510 in direct contact with the wall 515 of the vertical upright 505.

At this point, the second portion 135 of the shank 110 of the screw 100 can be axially inserted into the second hole 525, obviously making it pass first through the first hole 520, until the thread 140 of the first portion 130 contacts the mouth of the second hole 525 thereof.

From this moment on, the screw 100 can be made to rotate around the own longitudinal axis X thereof, so as to screw the first axial portion 130 of the shank 110 inside the second hole 525.

This screwing causes an internal tapping of the second hole 525 and at the same time an axial displacement of the screw 100, the second axial portion 135 of which is inserted more deeply into the second hole 525, until the wall 515 of the vertical upright 505 is tightened and compressed between the head 105 of the screw and the end of the horizontal cross-member 510 (as illustrated in figure 4).

This configuration is reached for example when the third portion 155 of the shank 110 (if any) is inserted into the first hole 520 and the abutment surface 125 of the head 105 of the screw 100 comes into contact with the wall 515, directly or possibly by interposition of a spacer ring.

In this way, thanks to the threaded coupling that is made between the first portion 130 of the shank 110 of the screw 100 and the tapped stretch of the second hole 525, the pieces results to be firmly blocked and fastened together.

Any shear stresses that may be applied to the pieces during the use of the trolley 500, will however not be discharged only on the first threaded portion 130 of the screw 100 but also on the second unthreaded portion 135, which results inserted substantially to size in a corresponding unthreaded stretch of the second hole 525.

Therefore, these shear stresses can be opposed more effectively, reducing the risk that the first threaded portion 130 can widen the second hole 525 up to the point of causing a loosening of the tightening.

For this effect to be perfect it is certainly and generally necessary that the second hole 525 has a sufficiently high depth to at least partially contain the second portion 135 of the shank 110 of the screw and not be completely tapped by the first portion 130.

In particular, it is generally necessary that the depth of the second hole 525 is greater than the length of the stretch of the first portion 130 of the shank 110 of the screw 100 which penetrates into the second hole 525 thereof, when the condition, in which the wall 515 of the vertical upright 505 is tightened between the head 105 of the screw 100 and the horizontal cross-member 510 as explained above, is reached.

Although the example described concerns the fastening of vertical uprights 505 and horizontal cross-members 510 as part of the assembly of a trolley 500, it is evident that the screw 100 can be used in the same way to join together any other pair of mechanical pieces.

Obviously, a person skilled in the art can make numerous modifications of a technical application nature to everything described, without thereby departing from the scope of the invention as claimed below.

## Claims

1. A screw (100) comprising a head (105) and a shank (110) extending from said head (105) according to a pre-set longitudinal axis (X), wherein said shank (110) comprises at least two axial portions, of which
a first portion (130), proximal to the head (105), which has an outer thread (140) adapted to make it self-threading or self-tapping, and
a second portion (135), distal to the head (105), which has smooth outer surface, constant cross-section and diameter (D2) between the outer diameter (D1') and the inner diameter (D1 ") of the first portion (130).

2. A screw (100) according to claim 1, **characterised in that** the first portion (130) has a three-lobed cross-section.

3. A screw (100) according to claim 1 or 2, **characterised in that** the outer thread (140) of the first portion (130) is a metric thread.

4. A screw (100) according to any one of the preceding claims, **characterised in that** the second portion (135) has a length (L2) equal to or greater than the length (L1) of the first portion (130).

5. A screw (100) according to any one of the preceding claims, **characterised in that** the shank (110) comprises a third axial portion (155) between the head (105) and the first portion (130), said third axial portion (155 ) having a cylindrical shape with a smooth outer surface and a diameter (D3) greater than the outer diameter (D1') of the first portion (130).

6. A screw (100) according to claim 5, **characterised in that** the third portion (155) has a length (L3) lower than the length (L1) of the first portion (130).

7. A screw (100) according to any one of the preceding claims, **characterised in that** the shank (110) does not have any axial portion, which is at the same time more distant from the head (105) and has a larger diameter than the second portion (135).

8. A screw (100) according to any one of the preceding claims, **characterised in that** it is made of steel.

9. A method for fastening two mechanical pieces (505, 510), comprising the steps of:
- providing a screw (100) according to any one of the preceding claims,
- in a first mechanical piece (505), making a first through hole (520) having a diameter greater than or equal to the outer diameter (D1') of the first portion (130) of the shank (110) of the screw (100),
- in a second mechanical piece (510), making a second hole (525) having a diameter smaller than the outer diameter (D1') of the first portion (130) of the shank (110) of the screw (100) and greater than or equal to the diameter (D2) of the second portion (135),
- arranging the first and the second mechanical pieces (505, 510) in such a way that the first hole (520) is aligned with the second hole (525),
- inserting the second portion (135) of the shank (110) of the screw (100) into the second hole (525), making it pass through the first hole (520), and
- subsequently screwing the first portion (130) of the shank (110) of the screw (100) into the second hole (525) until the first mechanical piece (505) is tightened between the head (105) of the screw (100) and the second mechanical piece (510),
the depth of the second hole (525) being greater than the length of the stretch of the first portion (130) of the shank (110) of the screw (100), which penetrates into the second hole (525), when the first mechanical piece (505) is tightened between the head (105) of the screw (100) and the second mechanical piece (510).

10. A method according to claim 9, wherein the second mechanical piece (510) is made of aluminium.

## Patentansprüche

1. Schraube (100), umfassend einen Kopf (105) und einen Schaft (110), der sich von dem Kopf (105) entlang einer voreingestellten Längsachse (X) erstreckt, wobei der Schaft (110) mindestens zwei axiale Abschnitte umfasst, darunter
ein erster Abschnitt (130) proximal zu dem Kopf (105), der ein Außengewinde (140) aufweist, das angepasst ist, um selbstgewindeschneidend oder selbstschneidend zu sein, und
ein zweiter Abschnitt (135), distal von dem Kopf (105), der eine glatte Außenfläche, einen konstanten Querschnitt und einen Durchmesser (D2) zwischen dem Außendurchmesser (D1') und dem Innendurchmesser (D1") des ersten Abschnitts (130) aufweist.

2. Schraube (100) nach Anspruch 1, **dadurch gekennzeichnet, dass** der erste Abschnitt (130) einen dreigeteilten Querschnitt aufweist.

3. Schraube (100) nach Anspruch 1 oder 2, **dadurch gekennzeichnet, dass** das Außengewinde (140) des ersten Abschnitts (130) ein metrisches Gewinde ist.

4. Schraube (100) nach einem der vorherigen Ansprüche, **dadurch gekennzeichnet, dass** der zweite Abschnitt (135) eine Länge (L2) aufweist, die gleich wie oder größer als die Länge (L1) des ersten Abschnitts (130) ist.

5. Schraube (100) nach einem der vorherigen Ansprüche, **dadurch gekennzeichnet, dass** der Schaft (110) einen dritten axialen Abschnitt (155) zwischen dem Kopf (105) und dem ersten Abschnitt (130) umfasst, wobei der dritte axiale Abschnitt (155) eine zylindrische Form mit einer glatten Außenfläche und einem Durchmesser (D3) größer als der Außendurchmesser (D1') des ersten Abschnitts (130) aufweist.

6. Schraube (100) nach Anspruch 5, **dadurch gekennzeichnet, dass** der dritte Abschnitt (155) eine Länge (L3) aufweist, die geringer ist als die Länge (L1) des ersten Abschnitts (130).

7. Schraube (100) nach einem der vorherigen Ansprüche, **dadurch gekennzeichnet, dass** der Schaft (110) keinen axialen Abschnitt aufweist, der gleichzeitig weiter von dem Kopf (105) entfernt ist und einen größeren Durchmesser als der zweite Abschnitt (135) aufweist.

8. Schraube (100) nach einem der vorherigen Ansprüche, **dadurch gekennzeichnet, dass** sie aus Stahl gefertigt ist.

9. Verfahren zum Befestigen von zwei mechanischen Teilen (505, 510), umfassend die folgenden Schritte:
- Bereitstellen einer Schraube (100) nach einem der vorherigen Ansprüche,
- in einem ersten mechanischen Teil (505), Anfertigen eines ersten Durchgangslochs (520), das einen Durchmesser aufweist, der größer als oder gleich wie der Außendurchmesser (D1') des ersten Abschnitts (130) des Schafts (110) der Schraube (100) ist,
- in einem zweiten mechanischen Teil (510), Anfertigen eines zweiten Lochs (525), das einen Durchmesser aufweist, der kleiner als der Außendurchmesser (D1') des ersten Abschnitts (130) des Schafts (110) der Schraube (100) und größer als oder gleich wie der Durchmesser (D2) des zweiten Abschnitts (135) ist,
- Anordnen des ersten und den zweiten mechanischen Teils (505, 510) auf eine Weise, dass das erste Loch (520) mit dem zweiten Loch (525) ausgerichtet ist,
- Einführen des zweiten Abschnitts (135) des Schafts (110) der Schraube (100) in das zweite Loch (525), wobei er durch das erste Loch (520) verläuft, und
- anschließendes Schrauben des ersten Abschnitts (130) des Schafts (110) der Schraube (100) in das zweite Loch (525), bis das erste mechanische Teil (505) zwischen dem Kopf (105) der Schraube (100) und dem zweiten mechanischen Teil (510) festgezogen ist,
wobei die Tiefe des zweiten Lochs (525) größer ist als die Länge der Ausdehnung des ersten Abschnitts (130) des Schafts (110) der Schraube (100), der in das zweite Loch (525) eindringt, wenn das erste mechanische Teil (505) zwischen dem Kopf (105) der Schraube (100) und dem zweiten mechanischen Teil (510) festgezogen wird.

10. Verfahren nach Anspruch 9, wobei das zweite mechanische Teil (510) aus Aluminium gefertigt ist.

## Revendications

1. Vis (100) comprenant une tête (105) et une tige (110) s'étendant à partir de ladite tête (105) selon un axe longitudinal prédéfini (X), dans laquelle ladite tige (110) comprend au moins deux parties axiales, dont
une première partie (130), proche de la tête (105), disposant d'un filetage extérieur (140) adapté pour la rendre auto-filetée ou auto-taraudeuse, et
une deuxième partie (135), distale par rapport à la tête (105), disposant d'une surface extérieure lisse, d'une section transversale constante et d'un diamètre (D2) compris entre le diamètre extérieur (D1') et le diamètre intérieur (D1") de la première partie (130).

2. Vis (100) selon la revendication 1, **caractérisée en ce que** la première partie (130) a une section transversale trilobée.

3. Vis (100) selon la revendication 1 ou 2, **caractérisée en ce que** le filetage extérieur (140) de la première partie (130) est un filetage métrique.

4. Vis (100) selon l'une quelconque des revendications précédentes, **caractérisée en ce que** la deuxième partie (135) a une longueur (L2) égale ou supérieure à la longueur (L1) de la première partie (130).

5. Vis (100) selon l'une quelconque des revendications précédentes, **caractérisée en ce que** la tige (110) comprend une troisième partie axiale (155) entre la tête (105) et la première partie (130), ladite troisième partie axiale (155) ayant une forme cylindrique avec une surface extérieure lisse et un diamètre (D3) supérieur au diamètre extérieur (D1') de la première partie (130).

6. Vis (100) selon la revendication 5, **caractérisée en ce que** la troisième partie (155) a une longueur (L3) inférieure à la longueur (L1) de la première partie (130).

7. Vis (100) selon l'une quelconque des revendications précédentes, **caractérisée en ce que** la tige (110) ne présente pas de partie axiale, qui est à la fois plus éloignée de la tête (105) et a un diamètre supérieur à la deuxième partie (135).

8. Vis (100) selon l'une quelconque des revendications précédentes, **caractérisée en ce qu'**elle est faite en acier.

9. Procédé de fixation de deux pièces mécaniques (505, 510), comprenant les étapes suivantes :
- la fourniture d'une vis (100) selon l'une quelconque des revendications précédentes,
- dans une première pièce mécanique (505), la réalisation d'un premier trou débouchant (520) ayant un diamètre supérieur ou égal au diamètre extérieur (D1') de la première partie (130) de la tige (110) de la vis (100),
- dans une deuxième pièce mécanique (510), la réalisation d'un deuxième trou (525) ayant un diamètre inférieur au diamètre extérieur (D1') de la première partie (130) de la tige (110) de la vis (100) et supérieur ou égal au diamètre (D2) de la deuxième partie (135),
- la disposition de la première et de la deuxième pièce mécanique (505, 510) de manière à ce que le premier trou (520) soit aligné avec le deuxième trou (525),
- l'insertion de la deuxième partie (135) de la tige (110) de la vis (100) dans le deuxième trou (525), en la faisant passer à travers le premier trou (520), et
- le vissage de la première partie (130) de la tige (110) de la vis (100) dans le deuxième trou (525) jusqu'à ce que la première pièce mécanique (505) soit serrée entre la tête (105) de la vis (100) et la deuxième pièce mécanique (510),
la profondeur du deuxième trou (525) étant supérieure à la longueur de l'étirement de la première partie (130) de la tige (110) de la vis (100), qui pénètre dans le deuxième trou (525), lorsque la première pièce mécanique (505) est serrée entre la tête (105) de la vis (100) et la deuxième pièce mécanique (510).

10. Procédé selon la revendication 9, dans lequel la deuxième pièce mécanique (510) est faite en aluminium.
